# EUROPÄISCHE PATENTANMELDUNG

(11) **EP 1 837 738 A1**
(43) Veröffentlichungstag der Anmeldung: **26.09.2007**
(21) Anmeldenummer: 06005852.6
(22) Anmeldetag: 22.03.2006
(51) Int. Cl.: G06F 3/02

(54) **Mobiles Datenverarbeitungs-Handgerät**

(71) Anmelder: Schweers Informationstechnologie GmbH, 40670 Meerbusch (DE)
(72) Erfinder: Schweers, Michael, 40670 Meerbusch (DE)
(74) Vertreter: DR. STARK & PARTNER

(57) **Zusammenfassung**

Die Erfindung betrifft ein mobiles Datenverarbeitungs-Handgerät, insbesondere für die Bearbeitung von durch eine Bedienperson detektierten Verstößen gegen Vorschriften , wie die Erfassung von Ordnungswidrigkeiten, beispielsweise bei Verstößen gegen Verkehrsvorschriften bei Überwachung des ruhenden bzw. fließenden Verkehrs, mit einem eine Vorderseite und eine Rückseite aufweisenden und eine Datenverarbeitungseinheit beinhaltenden Gehäuse, in dessen Vorderseite sowohl eine Eingabeeinrichtung für die Dateneingabe und/oder Bedienung des Datenverarbeitungs-Handgeräts als auch eine als Display ausgebildete Anzeigeeinrichtung für die Ausgabe von Bild- und/oder Verarbeitungs- und/oder Steuerungsinformationen vorgesehen sind, wobei die Eingabeeinrichtung als eine Tastatur mit einer Tatstaturbelegung mit üblichen QWERTZ- bzw. QWERTY-Tastenkolonnen ausgebildet ist.

Um eine zügige und möglichst fehlerfreie Texteingabe durch den Benutzer des Geräts zu ermöglichen, soll die üblichen QWERTZ- bzw. QWERTY-Tastenkolonnen (QWERTZ..., ASDF..., YXCV...) bei normaler Handhabung des mobilen Datenverarbeitungs-Handgeräts vertikal ausgerichtet sein und die Ausrichtung der Tastenbeschriftung auf den einzelnen Tasten horizontal entsprechend der horizontal lesbaren Display-Anzeige auf der Anzeigeeinrichtung vorgesehen sein.

## Beschreibung

Die Erfindung betrifft ein mobiles Datenverarbeitungs-Handgerät, insbesondere für die Bearbeitung von durch eine Bedienperson detektierten Verstößen gegen Vorschriften oder dergleichen, wie z. B. die Erfassung von Ordnungswidrigkeiten, beispielsweise bei Verstößen gegen Verkehrsvorschriften bei der Überwachung des ruhenden und/oder fließenden Verkehrs, mit einem eine Vorderseite und eine Rückseite aufweisenden und eine Datenverarbeitungseinheit beinhaltenden Gehäuse, in dessen Vorderseite sowohl eine Eingabeeinrichtung für die Dateneingabe und/oder Bedienung des Datenverarbeitungs-Handgeräts als auch eine als Display ausgebildete Anzeigeeinrichtung für die Ausgabe von Bild- und/oder Verarbeitungs- und/oder Steuerungsinformationen vorgesehen sind, wobei die Eingabeeinrichtung als eine Tastatur mit einer Tatstaturbelegung mit üblichen QWERTZ- bzw. QWERTY-Tastenkolonnen ausgebildet ist.

Aus der Praxis sind derartige mobile Datenverarbeitungs-Handgeräte bekannt, die unterschiedlichste Ausprägungen aufweisen können. Dabei sind in minimalisierter Form Tastaturen mit einer üblichen Kolonnen QWERTZ- bzw. QWERTY-Belegung vorgesehen, wobei die QWERTZ- bzw. QWERTY-Tastenkolonnen bei normaler Handhabung des mobilen Datenverarbeitungs-Handgerätes horizontal ausgerichtet sind und die Tastenbeschriftung auf den einzelnen Tasten ebenfalls horizontal entsprechend der horizontal lesbaren Display-Anzeige auf der Anzeigeeinrichtung vorgesehen ist.

Nachteilig hierbei ist, dass durch die begrenzten Dimensionen des mobilen Datenverarbeitungs-Handgeräts und dem wegen der benötigten Mobilität vertikal ausgerichteten Aufbau des Geräts der Platz für die Tastatur sehr schmal ist und die räumliche Enge damit sehr kleine Tasten bedingt. Diese sind zum einen schlecht zu bedienen und können aufgrund der ebenfalls sehr kleinen Beschriftung auch nicht mit der erforderlichen Sicherheit für ein zügiges Eingeben von längeren Texten bedient werden.

Weiterhin sind häufig aufgrund des geringen Platzes keine separate Zifferntasten vorgesehen, so dass eine Tastendoppelbelegung mit einer zusätzlichen Umschalttaste bzw. Umschaltfunktion erforderlich ist. Bei gemischter Eingabe von Buchstraben und Ziffern, so wie dies beispielsweise bei Kfz-Kennzeichen oder Tatbestandskennziffern der Fall ist, ist eine solche Doppelbelegung jedoch eher hinderlich und erfordert ein umständliches und zeitintensives sowie Fehlbeingaben förderndes häufiges Umschalten zwischen den verschiedenen Tastaturmodi.

Aufgabe der Erfindung ist es, die vorgenannten Nachteile zu vermeiden und ein mobiles Datenverarbeitungs-Handgerät der eingangs genannten Art anzugeben, mit dem eine zügige und möglichst fehlerfreie Texteingabe durch den Benutzer des Geräts erfolgen kann.

Diese Aufgabe wird dadurch gelöst, dass die üblichen QWERTZ- bzw. QWERTY-Tastenkolonnen (QWERTZ..., ASDF..., YXCV...) bei normaler Handhabung des mobilen Datenverarbeitungs-Handgeräts vertikal ausgerichtet sind und die Ausrichtung der Tastenbeschriftung auf den einzelnen Tasten horizontal entsprechend der horizontal lesbaren Display-Anzeige auf der Anzeigeeinrichtung vorgesehen ist. Hierdurch ist aufgrund der vertikalen Anordnung der Tastenkolonnen als nebeneinander befindliche Spalten bei gleicher Gerätebreite eine deutlich vergrößerte Tastenfläche pro einzelne Taste möglich, so dass sowohl die Treffgenauigkeit als auch die Beschriftungsgröße, und damit die Lesbarkeit, deutlich verbessert ist. Die Bedienung wird damit vereinfacht und Fehleingaben verringert.

Die Belegung bzw. das Layout des Tastatur kann dabei entweder um 90° rechts herum oder um 90° links herum gegenüber einer üblichen quer ausgerichteten Tastatur vorgesehen sein. Auch können je nach Bedarf zusätzliche Spalten und/oder Zeilen, z.B. für Zahlen und/oder Funktionstasten, vorgesehen sein.

Dabei können die Tasten der üblichen QWERTZ- bzw. QWERTY-Tastenkolonnen (QWERTZ..., ASDF..., YXCV...) einheitlich mit jeweils übereinstimmender Form ausgebildet sein, so dass durch ein einheitliches Erscheinungsbild eine besonders aufgeräumte Bedienoberfläche resultiert und eine Bedienung ohne genaues Hinsehen eher erfolgen kann.

Vorteilhafterweise können die üblichen QWERTZ- bzw. QWERTY-Tastenkolonnen (QWERTZ..., ASDF..., YXCV...) bei normaler Handhabung des mobilen Datenverarbeitungs-Handgeräts vertikal unterhalb der Display-Anzeige vorgesehen sein, so dass bei vertikaler Ausrichtung des mobilen Datenverarbeitungs-Handgeräts die Betätigung horizontal nebeneinanderliegender Tasten der unterschiedlichen Tastenkolonnen lediglich durch seitliche, d.h. horizontale, Verlagerung des entsprechenden Fingers erfolgen kann.

Erfindungsgemäß können die üblichen QWERTZ- bzw. QWERTY-Tastenkolonnen (QWERTZ..., ASDF...., YXCV..) bei normaler Handhabung des mobilen Datenverarbeitungs-Handgeräts zueinander keinen vertikalen Längsversatz aufweisen und die einzelnen Tasten der Tastenkolonnen in Reihen nebeneinander vorgesehen sein (z. B. QAY, WSX, EDC, etc.).

Alternativ können die üblichen QWERTZ- bzw. QWERTY-Tastenkolonnen (QWERTZ..., ASDF...., YXCV..) zueinander einen Längsversatz aufweisen und die einzelnen Tasten der Tastenkolonnen in Reihen nebeneinander vorgesehen sein (Q, WA, ESY, RDX etc.), so dass eine möglichst ähnliche Anordnung der einzelnen Tasten zu einer üblichen Schreibmaschinen- oder Computertastatur gegeben ist, wobei statt einer halben Tastenbreite ein Versatz um eine ganze Tastenbreite gegeben ist. Dabei können insoweit resultierende Freiräume am Ende einer Tastenkolonne für eine insgesamt rechteckige Tastaturanordnung durch zusätzliche Tasten mit weiteren Funktionsbelegungen oder dergleichen aufgefüllt sein.

Vorzugsweise kann die Tastatur mechanisch ausgebildet sein, so dass eine sichere Bedienung durch einen guten Druckpunkt oder dergleichen erfolgen kann und eine hohe mechanische Belastbarkeit der Tastatur gegeben ist.

Alternativ kann die Tastatur als berührungssensitive Fläche ausgebildet sein, so dass durch Vermeidung von mechanischen Bestandteilen die Gefahr technischer Defekte reduziert wird.

Auch kann die Tastatur als Touchscreen ausgebildet sein, so dass zum einen die Tastaturbelegung beliebig angepasst werden kann und zum anderen die durch die Tastatur beanspruchte Fläche bei Nichtbenutzung der Tastatur für anderweitige Anwendungen, z.B. die Anzeige separater Daten oder dergleichen, zur Verfügung steht.

Dabei kann die als Touchscreen ausgebildete Tastatur als eine Einheit mit der Anzeigeeinrichtung ausgebildet sein, was eine bauteiletechnische Vereinfachung darstellt.

Bei einem bevorzugten Ausführungsbeispiel der Erfindung kann die Display-Anzeige auf der Anzeigeeinrichtung bei quer gehaltenem mobilen Datenverarbeitungs-Handgerät entsprechend quer orientiert lesbar sein, so dass bei einer Anordnung der Tastaturkolonnen entsprechend einer üblichen Schreibmaschinen- oder Computertastatur das Display dann auf eine um 90° entsprechend links oder rechts herum gedrehte Anzeigedarstellung umgeschaltet werden kann. Die Beschriftung der Tastatur ist dabei dann prinzipiell um 90° verdreht und nicht normal lesbar, aber dennoch einfach bedienbar.

Um dieses zu vermeiden, kann die Ausrichtung der Tastenbeschriftung durch eine austauschbare oder wendbare Abdeckung einer berührungssensitiven Fläche entsprechend der quer orientierten (lesbaren) Display-Anzeige vorgesehen sein, so dass eine Anpassung der Tastenbeschriftung an die jeweilige Halteausrichtung des Datenverarbeitungs-Handgeräts möglich ist.

Auch kann die Ausrichtung der Tastenbeschriftung durch eine entsprechend angepasste Anzeige des Touchscreen entsprechend der quer orientierten lesbaren Display-Anzeige vorgesehen sein, so dass eine automatische Anpassung der Tastenbeschriftung entsprechend der Orientierung der Displayanzeige auf der Anzeigeeinrichtung erfolgen kann.

Im Folgenden werden in der Zeichnung dargestellte Ausführungsbeispiele der Erfindung erläutert. Es zeigen:
- Fig. 1: ein erstes Ausführungsbeispiel eines erfindungsgemäßen mobilen Datenverarbeitungs-Handgeräts in vertikaler Anordnung,
- Fig. 2: den Gegenstand nach Fig. 1 in horizontaler Ausrichtung,
- Fig. 3: ein zweites Ausführungsbeispiel eines erfindungsgemäßen mobilen Datenverarbeitungs-Handgeräts,
- Fig. 4: den Gegenstand nach Fig. 1 in horizontaler Ausrichtung,

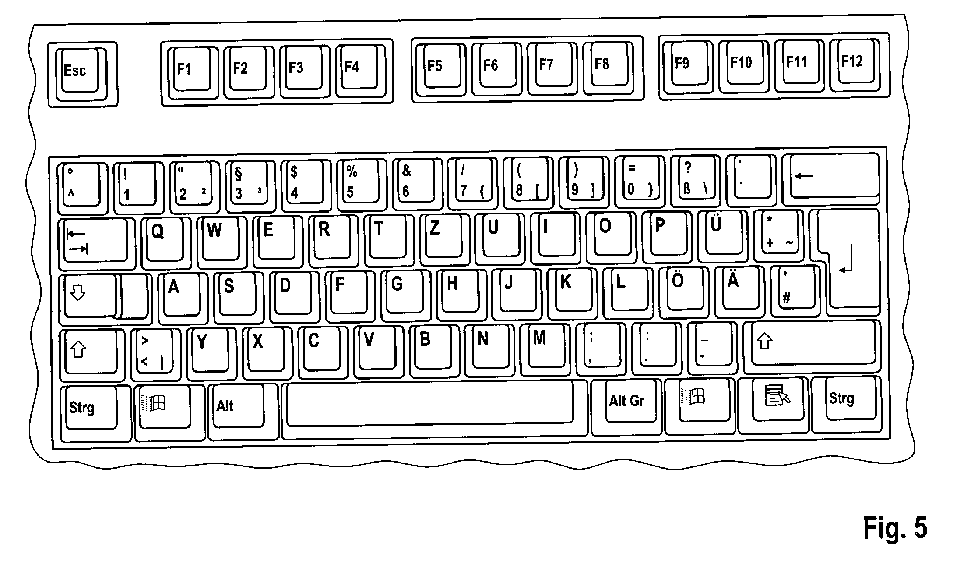

- Fig. 5: das Tastaturlayout einer üblichen Computertastatur.

In allen Figuren werden für gleiche bzw. gleichartige Bauteile übereinstimmende Bezugszeichen verwendet.

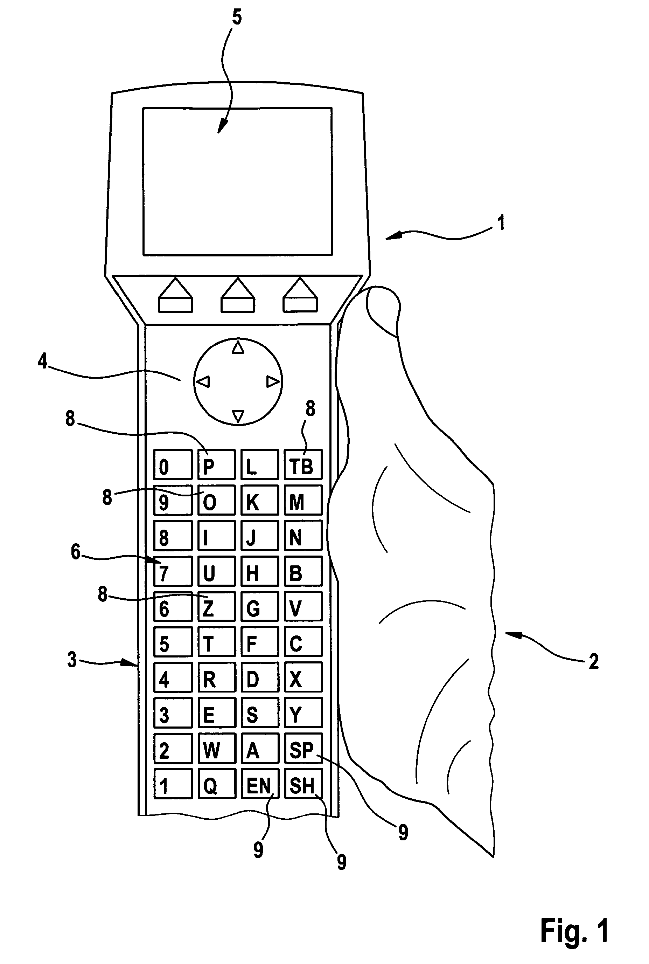

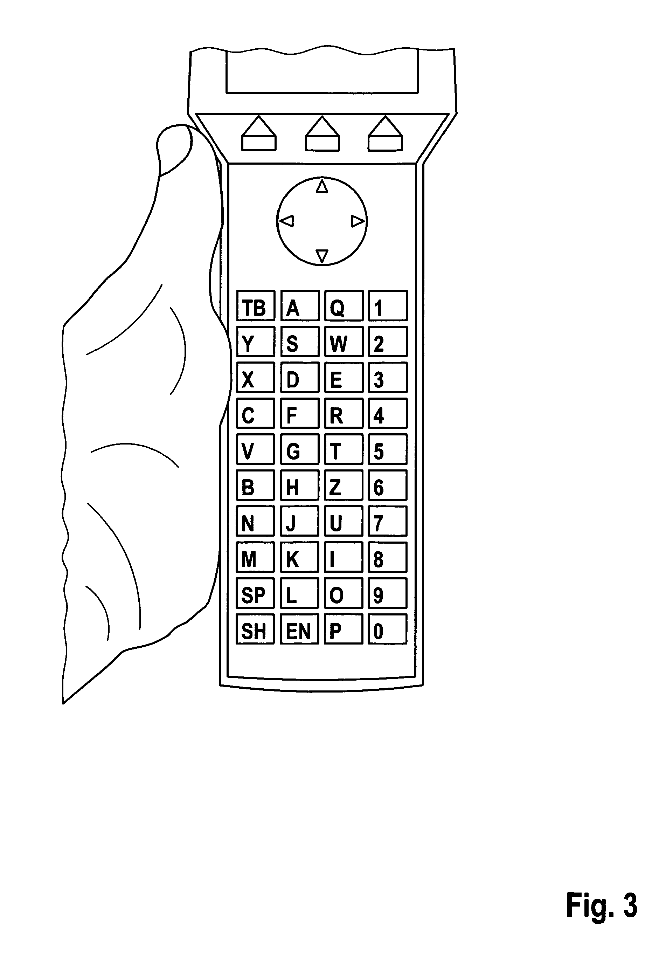

Die Figuren 1 und 3 zeigen jeweils ein mobiles Datenverarbeitungs-Handgerät 1 sowie die rechte bzw. linke Hand einer ansonsten in der Zeichnung nicht dargestellten Bedienperson 2.

Dabei weist jeweils das Datenverarbeitungs-Handgerät 1 ein Gehäuse 3 mit einer Vorderseite 4 auf, in der eine als Display ausgebildete Anzeigeeinrichtung 5 sowie eine Eingabeeinrichtung 6 vorgesehen sind. Die Eingabeeinrichtung 6 umfasst dabei eine Tastatur 7 mit einer Vielzahl an Tasten 8, die im dargestellten Ausführungsbeispiel in nebeneinander angeordneten Spalten vorgesehen sind. Die Tastaturbelegung ist dabei entsprechend einer üblichen Computertastatur mit einem so genannten QWERTZ- bzw. QWERTY-Layout versehen, wobei die üblichen Tastenkolonnen (QWERTZ..., ASDF...., YXCV..) bei normaler Handhabung des Datenverarbeitungs-Handgeräts 1 vertikal ausgerichtet sind und die Ausrichtung des Tastenbeschriftung auf den einzelnen Tasten 8 horizontal entsprechend der horizontal lesbaren Displayanzeige auf der Anzeigeeinrichtung 5 vorgesehen ist.

Dabei sind die einzelnen Tasten 8 der jeweiligen Tastenkolonnen zumindest in der jeweiligen Tastenkolonne einheitlich mit jeweils übereinstimmender Form ausgebildet und die Tastenkolonnen sind bei normaler Handhabung des Datenverarbeitungs-Handgeräts 1, das hierbei eine vertikale Ausrichtung aufweist, unterhalb der Anzeigeeinrichtung 5 vorgesehen.

Die Tastenkolonnen können einheitlich nebeneinander angeordnet sein, im dargestellten Ausführungsbeispiel ist jedoch ein Längsversatz zwischen den einzelnen QWERTZ- bzw. QWERTY-Tastenkolonnen vorgesehen, wobei die insoweit resultierenden Freibereiche durch Funktionstasten 9 belegt und aufgefüllt sind.

Im dargestellten Ausführungsbeispiel ist die Tastatur 7 nicht mechanisch ausgebildet und auch nicht als Touchscreen vorgesehen, sondern wird durch eine berührungssensitive Fläche gebildet.

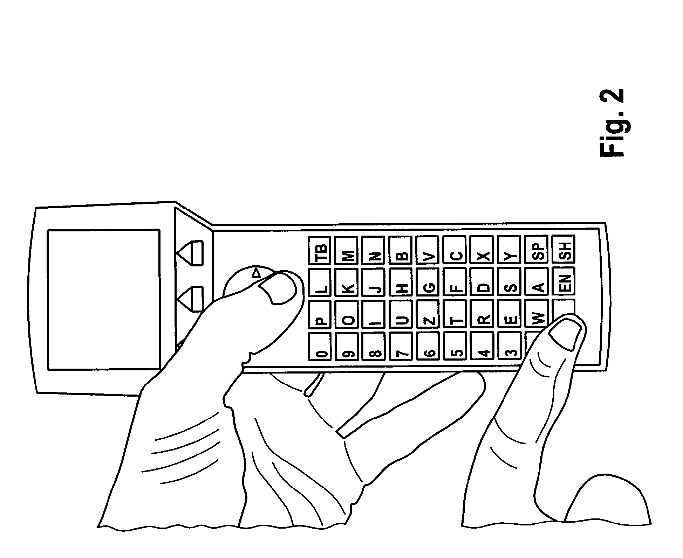

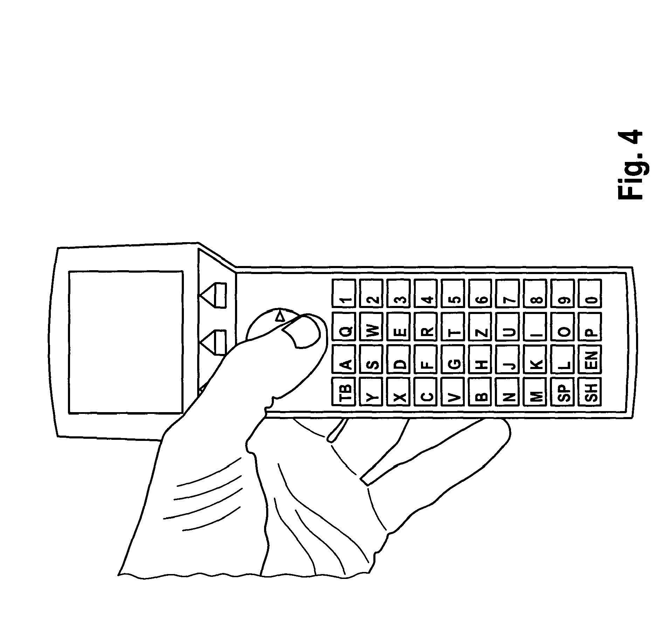

Wie aus den Figuren 2 und 4 ersichtlich, ist insoweit bei quer gehaltenem mobilen Datenverarbeitungs-Handgerät 1 die Tastenbeschriftung zunächst um 90° verdreht und somit nicht "normal" lesbar. Die Displayanzeige auf der Anzeigeeinrichtung 5 kann für die Eingabe eines umfangreicheren Textes auf eine Querdarstellung umgeschaltet werden. Dies kann bei einem Touchscreen automatisch durch Erkennung der Ausrichtung des Datenverarbeitungs-Handgeräts 1 erfolgen oder aber von der Bedienperson 2 durch Tastenbetätigung umgeschaltet werden.

Durch eine austauschbare oder insbesondere wendbare Abdeckung auf der berührungssensitiven Fläche der Eingabeeinrichtung 6 kann im dargestellten Ausführungsbeispiel ohne Änderung des Tastaturlayouts die Beschriftung der einzelnen Tasten 8 entsprechend angepasst werden.

## Patentansprüche

1. Mobiles Datenverarbeitungs-Handgerät (1), insbesondere für die Bearbeitung von durch eine Bedienperson (2) detektierten Verstößen gegen Vorschriften oder dergleichen, wie z. B. die Erfassung von Ordnungswidrigkeiten, beispielsweise bei Verstößen gegen Verkehrsvorschriften bei der Überwachung des ruhenden und/oder fließenden Verkehrs, mit einem eine Vorderseite (4) und eine Rückseite aufweisenden und eine Datenverarbeitungseinheit beinhaltenden Gehäuse (3), in dessen Vorderseite (4) sowohl eine Eingabeeinrichtung (6) für die Dateneingabe und/oder Bedienung des Datenverarbeitungs-Handgeräts (1) als auch eine als Display ausgebildete Anzeigeeinrichtung (5) für die Ausgabe von Bild- und/oder Verarbeitungs- und/oder Steuerungsinformationen vorgesehen sind, wobei die Eingabeeinrichtung (6) als eine Tastatur mit einer Tatstaturbelegung mit üblichen QWERTZ- bzw. QWERTY-Tastenkolonnen ausgebildet ist, **dadurch gekennzeichnet, dass** die üblichen QWERTZ- bzw. QWERTY-Tastenkolonnen (QWERTZ..., ASDF...., YXCV..) bei normaler Handhabung des mobilen Datenverarbeitungs-Handgeräts (1) vertikal ausgerichtet sind und die Ausrichtung der Tastenbeschriftung auf den einzelnen Tasten (8) horizontal entsprechend der horizontal lesbaren Display-Anzeige auf der Anzeigeeinrichtung (5) vorgesehen ist.

2. Mobiles Datenverarbeitungs-Handgerät (1) nach dem vorhergehenden Anspruch, **dadurch gekennzeichnet, dass** die Tasten (8) der üblichen QWERTZ- bzw. QWERTY-Tastenkolonnen (QWERTZ..., ASDF...., YXCV..) einheitlich mit jeweils übereinstimmender Form ausgebildet sind.

3. Mobiles Datenverarbeitungs-Handgerät (1) nach einem der vorhergehenden Ansprüche, **dadurch gekennzeichnet, dass** die üblichen QWERTZ- bzw. QWERTY-Tastenkolonnen (QWERTZ..., ASDF...., YXCV..) bei normaler Handhabung des mobilen Datenverarbeitungs-Handgeräts (1) vertikal unterhalb der Display-Anzeige vorgesehen sind.

4. Mobiles Datenverarbeitungs-Handgerät (1) nach einem der vorhergehenden Ansprüche, **dadurch gekennzeichnet, dass** die üblichen QWERTZ- bzw. QWERTY-Tastenkolonnen (QWERTZ..., ASDF...., YXCV..) bei normaler Handhabung des mobilen Datenverarbeitungs-Handgeräts (1) zueinander keinen vertikalen Längsversatz aufweisen und die einzelnen Tasten (8) der Tastenkolonnen in Reihen nebeneinander vorgesehen sind (z. B. QAY, WSX, EDC, etc.).

5. Mobiles Datenverarbeitungs-Handgerät (1) nach einem der Ansprüche 1 bis 3, **dadurch gekennzeichnet, dass** die üblichen QWERTZ- bzw. QWERTY-Tastenkolonnen (QWERTZ..., ASDF...., YXCV..) zueinander einen Längsversatz aufweisen und die einzelnen Tasten (8) der Tastenkolonnen in Reihen nebeneinander vorgesehen sind (Q, WA, ESY, RDX etc.).

6. Mobiles Datenverarbeitungs-Handgerät (1) nach einem der vorhergehenden Ansprüche, **dadurch gekennzeichnet, dass** die Tastatur (7) mechanisch ausgebildet ist.

7. Mobiles Datenverarbeitungs-Handgerät (1) nach einem der Ansprüche 1 bis 6, **dadurch gekennzeichnet, dass** die Tastatur (7) als berührungssensitive Fläche ausgebildet ist.

8. Mobiles Datenverarbeitungs-Handgerät (1) nach einem der Ansprüche 1 bis 6, **dadurch gekennzeichnet, dass** die Tastatur (7) als Touchscreen ausgebildet ist.

9. Mobiles Datenverarbeitungs-Handgerät (1) nach dem vorhergehenden Anspruch, **dadurch gekennzeichnet, dass** die als Touchscreen ausgebildete Tastatur (7) als eine Einheit mit der Anzeigeeinrichtung (5) ausgebildet ist.

10. Mobiles Datenverarbeitungs-Handgerät (1) nach einem der vorhergehenden Ansprüche, **dadurch gekennzeichnet, dass** die Display-Anzeige der Anzeigeeinrichtung (5) bei quer gehaltenem mobilen Datenverarbeitungs-Handgerät (1) entsprechend quer orientiert lesbar ist.

11. Mobiles Datenverarbeitungs-Handgerät (1) nach dem vorhergehenden Anspruch, soweit auf Anspruch 8 rückbezogen, **dadurch gekennzeichnet, dass** die Ausrichtung der Tastenbeschriftung durch eine entsprechend angepasste Anzeige des Touchscreen entsprechend der quer orientierten lesbaren Display-Anzeige vorgesehen ist.

12. Mobiles Datenverarbeitungs-Handgerät (1) nach Anspruch 10, soweit auf Anspruch 7 rückbezogen, **dadurch gekennzeichnet, dass** die Ausrichtung der Tastenbeschriftung durch eine austauschbare oder wendbare Abdeckung einer berührungssensitiven Fläche entsprechend der quer orientierten (lesbaren) Display-Anzeige vorgesehen ist.
